# EUROPÄISCHE PATENTANMELDUNG

(11) **EP 2 447 312 A1**
(43) Veröffentlichungstag der Anmeldung: **02.05.2012**
(21) Anmeldenummer: 11176464.3
(22) Anmeldetag: 03.08.2011
(51) Int. Cl.: C08J 11/04, B29B 17/02, B29C 47/68

(54) **Verfahren und Vorrichtung zur Reinigung von thermoplastischen Polymeren**

(30) Priorität: 26.10.2010 DE 102010042959
(71) Anmelder: Krones AG, 93073 Neutraubling (DE)
(72) Erfinder: Friedlaender, Thomas, 93049 Regensburg (DE)
(74) Vertreter: Grünecker, Kinkeldey, Stockmair & Schwanhäusser

(57) **Zusammenfassung**

Die Erfindung bezieht sich auf ein Verfahren zur Reinigung eines thermoplastischen Polymers, umfassend mindestens einen dispergierten Füllstoff, wobei das Verfahren den Schritt (a) des Herstellens einer Polymerschmelze des thermoplastischen Polymers, und den Schritt (b) des Filtrierens der Polymerschmelze umfasst, dadurch gekennzeichnet, dass der dispergierte Füllstoff vor Schritt (b) zumindest teilweise in eine koagulierte und filtrierbare Form überführt wird. Weiter betrifft die Erfindung eine Vorrichtung zur Reinigung des thermoplastischen Polymers, wobei die Vorrichtung ein Mittel zur Herstellung einer Polymerschmelze aus dem thermoplastischen Polymer und ein Filtermittel umfasst, dadurch gekennzeichnet, dass die Vorrichtung weiter ein Mittel zum Erzeugen von Schallwellen, bevorzugt Ultraschallwellen, umfasst.

## Beschreibung

Die Erfindung bezieht sich auf ein Verfahren und auf eine Vorrichtung zur Reinigung eines thermoplastischen Polymers nach dem Oberbegriff des Anspruchs 1 bzw. 10. Weiter umfasst die Erfindung die Verwendung eines Koagulierungsmittels und/oder eines Mittels zum Erzeugen von Schallwellen zur Reinigung des thermoplastischen Polymers nach dem Oberbegriff des Anspruchs 15.

Thermoplastische Polymere finden vielfältige Anwendungen zum Beispiel in der Verpackungsindustrie. Dabei werden die Polymere häufig mit Füllstoffen versetzt um verschiedensten Materialeigenschaften zu verbessern. So werden insbesondere bei PET Getränkeflaschen Titandioxidpigmente eingesetzt, um eine Undurchlässigkeit gegenüber sichtbarem Licht zu erzielen, was die Haltbarkeit von lichtempfindlichen Lebensmitteln wie zum Beispiel Mich erhöht. Weiter werden verbreitet Farbpigmente eingesetzt, um das optische Erscheinungsbild der Flaschen zu modifizieren. Verbreitet werden auch Additive zur Beeinflussung der Gasdiffusion beigefügt. Die Füllstoffe werden möglichst fein und gleichmäßig in der Polymermatrix dispergiert um eine optisch homogene Mischung zu erzielen und um die mechanischen Materialeigenschaften nicht zu verschlechtern. Dies wird herkömmlich über Masterbatch-Technologien und/oder die Verwendung von oberflächenmodifizierten Füllstoffen erreicht.

Die gute Dispergiertheit der Füllstoffe in den thermoplastischen Polymeren führt allerdings zu Problemen bei herkömmlichen Recyclingprozessen dieser Materialien, da die Füllstoffe nur ungenügend wieder aus dem Recyclat entfernt werden können.

Zum Recyclen werden die Materialien nach deren Verwendung üblicherweise gesammelt, durch mechanische und physikalische Trennverfahren nach Materialtypen sortiert, dann in kleinere Stücke, den sogenannten Polymerflakes, zerschnitten und gewaschen. Diese Polymerflakes stellen ein Zwischenprodukt beim Recyclingprozess dar, und werden über einen kontinuierlichen Extrusionsvorgang wieder in Polymergranulat überführt, das erneut in beliebige Produkte umgeformt werden kann.

Der Verbleib von Farbpigmenten im Recyclat vermindert dessen Qualität und Wiederverwertbarkeit, da damit nur noch solche Produkte hergestellt werden können, die einen dunkleren Farbton als das Recyclat haben. Andererseits ist es für viele Anwendungen erforderlich, ein farbloses, transparentes Produkt zu erzielen. Um diesen negativen Effekt zu unterdrücken, ist üblicherweise in der Extrusions- und Granulierungsvorrichtung ein mechanischer Filter vorhanden, mit dem Füllstoffe aus der Polymerschmelze abgetrennt werden sollen. Allerdings können die Partikelgrößen von fein dispergierten Füllstoffen bereits im Bereich der Polymermakromoleküle liegen, so dass diese durch den mechanischen Filterungsschritt nicht oder nur ungenügend aus der Polymerschmelze entfernt werden können.

Die DE 4112786 A1 und JP 2007/246833A beschreiben Verfahren zum Abtrennen von Füllstoffen aus Polymerlösungen, ohne jedoch das Abtrennen aus einer Polymerschmelze zu offenbaren. Die US 2010/0249253 A1 betrifft ein Verfahren zum Recyceln von Polyvinylbutyral in laminiertem Glas, umfassend chemische Reinigungsschritte, wobei das Polyvinylbutyral in der Festphase vorliegt. Diese Verfahren sind relativ aufwendig und uneffektiv, da sie das Herstellen einer Polymerlösung oder eine chemische Behandlung erfordern.

Somit liegt die Aufgabe der Erfindung in der Bereitstellung eines Verfahrens und einer Vorrichtung zur Reinigung von thermoplastischen Polymeren, wobei im Polymer dispergierte Füllstoffe effektiv und kostengünstig abgetrennt werden können, und wobei die Reinigung mit einem mechanischen Filter durchgeführt werden kann.

Diese Aufgabe wird durch das Verfahren gemäß Anspruch 1 gelöst. Bevorzugte Ausführungsformen sind in den Ansprüchen 2 bis 9 beschrieben.

Im erfindungsgemäßen Verfahren nach Anspruch 1 wird der dispergierte Füllstoff vor dem Schritt des Filtrierens der Polymerschmelze zumindest teilweise in eine koagulierte und filtrierbare Form überführt. Durch die Koagulation der Füllstoffe zu Agglomeraten erfolgt eine Volumenvergrößerung (bzw. genauer eine Vergrößerung des mittleren Partikeldurchmessers). Dadurch kann die Partikelgröße der koagulierten Füllstoffe im Vergleich zur Größe der Polymermakromoleküle soweit erhöht werden, dass diese effektiv über einen mechanischen Filterungsschritt aus der Polymerschmelze entfernt werden können. Somit können mechanische Filtersysteme zum Abtrennen der Füllstoffe aus den thermoplastischen Polymeren verwendet werden. Durch die Erhöhung der Partikelgröße der Füllstoffe vor dem Filterprozess wird es weiter ermöglicht, Filter mit relativ großen Filterporen zu verwenden. Dadurch ist das Verfahren zur Reinigung der thermoplastischen Polymere effektiv und kostengünstig, da durch die Erhöhung der Filterporengröße der Durchsatz der Polymerschmelze vereinfacht und beschleunigt wird.

Bevorzugt wird das Überführen des dispergierten Füllstoffs in eine koagulierte und filtrierbare Form durch die Zugabe eines Koagulierungsmittels bewerkstelligt. Die Zugabe dieses Koagulierungsmittels zum thermoplastischen Polymer kann bereits vor der Herstellung der Polymerschmelze erfolgen, d.h. zu einem Zeitpunkt, bei dem das thermoplastische Polymer in einem festen Zustand vorliegt. Zusätzlich oder alternativ dazu kann das Koagulierungsmittel zu einem Zeitpunkt zugegeben werden, bei dem das thermoplastische Polymer bereits in der Schmelze vorliegt. Durch die Zugabe des Koagulierungsmittels kann der dispergierte Füllstoff besonders effektiv koaguliert und in eine filtrierbare Form überführt werden. Weiter lässt sich dadurch eine besonders großer Koagulat-Partikeldurchmesser erzielen und somit die erforderliche Filterporengröße weiter gesteigert werden.

Insbesondere erfolgt die Koagulierung des dispergierten Füllstoffs aufgrund einer chemischen Reaktion des Füllstoffs mit dem Koagulierungsmittel. Zusätzlich oder alternativ dazu kann eine chemische Reaktion des Füllstoffs selbst erfolgen, die durch das Koagulierungsmittel induziert wird, und/oder es ist möglich, dass die Koagulierung des dispergierten Füllstoffs aufgrund der Änderung mindestens eines physikalischen Parameters, insbesondere des pH-Werts, erfolgt, wobei diese Änderung durch das Koagulierungsmittel induziert wird. Dadurch ist eine besonders effektive Koagulierung der dispergierten Füllstoffe und somit eine effektive Reinigung des thermoplastischen Polymers möglich.

Alternativ oder in Kombination dazu kann das Überführen des dispergierten Füllstoffs in eine koagulierte und filtrierbare Form durch das Behandeln der Polymerschmelze mit Schallwellen erfolgen. Insbesondere werden dabei Ultraschallwellen, bevorzugt zwischen 60 kHz und 1,6 GHz, besonders bevorzugt zwischen 20 kHz und 100 kHz, verwendet. Durch die Behandlung mit Schallwellen erfolgt eine besonders effektive und schnelle Koagulierung. Insbesondere in Verbindung mit einer Verwendung von Koagulierungsmitteln kann die zusätzliche Einbringung von Schallwellen den durch das Koagulierungsmittel induzierten Koagulierungsprozess der Füllstoffe unterstützen und beschleunigen.

Die vorliegende Erfindung umfasst insbesondere thermoplastische Polymere, die ausgewählt sind aus der Gruppe, umfassend Polyester, Polystyrol, Polyolefin, Polyamid und Polycarbonat, bevorzugt Polyethylenterephthalat, Polypropylen oder Polyethylen, oder Copolymere dieser Polymere.

Als Füllstoffe werden alle Fremdstoffe bezeichnet, die im Polymer vorliegen. Insbesondere umfasst sind organische und/oder anorganische Füllstoffe, die ausgewählt sind aus der Gruppe, umfassend Färbemittel wie Pigmente, insbesondere Titandioxid, Lichtschutzmittel, Verstärkungsmittel, insbesondere Fasern wie Glasfasern oder Polymerfasern, Flammschutzmittel, Sauerstoffscavenger oder Antiblockmittel. Weiter umfasst sind Katalysatoren, die bei der Herstellung der Polymere verwendet wurden, wie z.B. Antimon-Katalysatoren für die Herstellung von Polyestern wie PET. Die quantitative Abtrennung dieser Füllstoffe aus dem thermoplastischen Polymer beim Recycling erhöht die Qualität und Wiederverarbeitbarkeit das Recyclats.

Je nach Art der Füllstoffe liegen diese in der polymeren Matrix insbesondere in molekular dispergierter Form oder in der Form von Partikeln vor. Dabei beträgt der Moleküldurchmesser bzw. mittlere Partikeldurchmesser insbesondere weniger als 1 µm, bevorzugt weniger als 0,1 µm, besonders bevorzugt weniger als 0,05 µm. Dadurch ist eine gute Dispergiertheit der Füllstoffe gewährleistet, so dass die gewünschten Materialeigenschaften im Produkt erzielt werden können.

Nach der Koagulation liegen die koagulierten Füllstoffe in der Polymerschmelze in der Form von Partikeln vor, wobei die mittlere Partikelgröße insbesondere mehr als 5 µm, bevorzugt mehr als 10 µm, besonders bevorzugt mehr als 100 µm beträgt. Dadurch können die koagulierten Füllstoffe aus der Polymerschmelze schnell und effektiv über mechanische Filter abgetrennt werden.

Weiter ist bevorzugt, dass sich der mittlere Partikeldurchmesser der Füllstoffe durch die Koagulation mindestens um den Faktor 5, bevorzugt Faktor 10, besonders bevorzugt Faktor 100, erhöht. Durch eine solche Ausgestaltung ist es möglich, eine besonders effektive Reinigung der thermoplastischen Polymere durch den Filterschritt zu erzielen, da die Größe der koagulierten Partikel, bzw. das Verhältnis der dispergierten Füllstoffe zu den koagulierten Füllstoffen, so eingestellt werden kann, dass eine besonders effektive Abtrennung bzw. Verfahrensführung erfolgen kann.

Die oben beschriebenen Aufgaben werden weiter mit einer Vorrichtung nach Anspruch 10 gelöst. Bevorzugte Ausführungsformen sind in den Ansprüchen 11 bis 14 beschrieben.

Die erfindungsgemäße Vorrichtung nach Anspruch 10 umfasst ein Mittel zum Erzeugen von Schallwellen, insbesondere von Ultraschallwellen. Dadurch wird die Polymerschmelze in der Vorrichtung mit Schallwellen beaufschlagt, was eine effektive und schnelle Koagulierung der in der Polymerschmelze dispergierten Füllstoffe bedingt. Durch die Überführung in eine koagulierte Form können die Füllstoffe über mechanische Filtersysteme aus dem Polymer abgetrennt werden. Weiter wird ermöglicht, Filter mit relativ großen Filterporen zu verwenden. Dadurch ist in der Vorrichtung die Reinigung der thermoplastischen Polymere effektiv und kostengünstig möglich, da durch die Erhöhung der Filterporengröße der Durchsatz der Polymerschmelze vereinfacht und beschleunigt wird.

Insbesondere ist in der Vorrichtung das Mittel zur Herstellung der Polymerschmelze eine Schneckenknet- und Extrudiervorrichtung zum kontinuierlichen Erzeugen und Befördern einer Polymerschmelze, wobei das Mittel zum Erzeugen von Schallwellen so angeordnet ist , dass die Polymerschmelze innerhalb der Schneckenknet- und Extrudiervorrichtung mit Schallwellen beaufschlagt wird, und bezüglich des Filtermittels so angeordnet ist, dass es sich stromaufwärts im Hinblick auf die Beförderungsrichtung der Polymerschmelze befindet. Durch eine solche Ausgestaltung der Vorrichtung ist eine effektive Beaufschlagung der Polymerschmelze mit Schallwellen möglich, was eine schnelle und effektive Koagulierung der dispergierten Füllstoffe ermöglicht.

Insbesondere ist das Mittel zum Erzeugen von Schallwellen ein Ultraschallwellengerät mit einer Frequenz zwischen 16 kHz und 1,6 GHz, besonders bevorzugt zwischen 20 kHz und 100 kHz. Durch die Beaufschlagung mit Schallwellen einer solchen Frequenz können dispergierte Füllstoffe in der Polymerschmelze besonders schnell und effektiv koagulieren.

Bevorzugt ist, dass die Vorrichtung eine Zuführungseinrichtung für ein Koagulierungsmittel umfasst, die bezüglich des Filtermittels, und bevorzugt außerdem bezüglich des Mittels zum Erzeugen von Schallwellen, so angeordnet ist, dass sie sich stromaufwärts im Hinblick auf die Beförderungsrichtung der Polymerschmelze befindet. Durch eine Kombination der Zugabe des Koagulierungsmittels über die Zuführungseinrichtung und die nachträgliche Beaufschlagung der Polymerschmelze mit Schallwellen erfolgt eine besonders effektive und schnelle Koagulierung der dispergierten Füllstoffe.

In einer weiteren bevorzugten Ausführungsform umfasst das Filtermittel der Vorrichtung ein oder mehrere Mikrosiebe, deren Maschenweite in dem Bereich von 10 µm bis 100 µm, bevorzugt im Bereich von 20 µm bis 50 µm, liegen, und/oder einen oder mehrere Partikelfilter, deren Maschenweiten im Bereich von 100 µm bis 1.000 µm, bevorzugt im Bereich von 200 µm bis 500 µm liegen. Dadurch können die koagulierten Füllstoffe effektiv abgetrennt werden, ohne dass das Filtermittel einen effektiven Verfahrensverlauf zur Reinigung des thermoplastischen Polymers beeinträchtigt.

Weiter umfasst die Erfindung die Verwendung eines Koagulierungsmittels und/oder eines Mittels zum Erzeugen von Schallwellen zur Reinigung eines thermoplastischen Polymers, umfassend mindestens einen dispergierten Füllstoff, wobei die Verwendung des Koagulierungsmittels und/oder des Mittels zum Erzeugen von Schallwellen dadurch gekennzeichnet ist, dass der dispergierte Füllstoff zumindest teilweise in eine koagulierte Form überführt und anschließend abfiltriert wird.

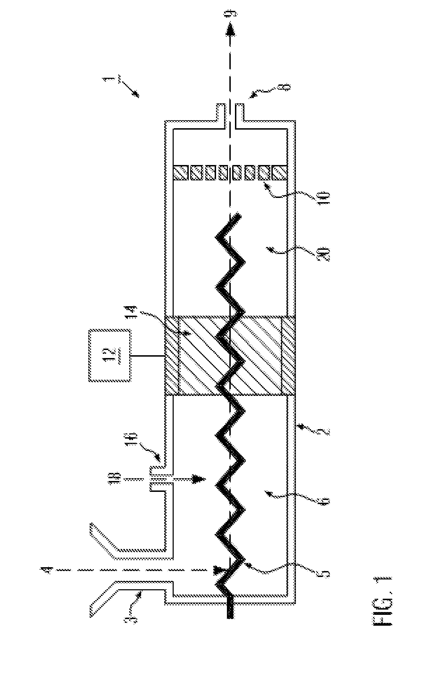

Die Erfindung und ihre Vorteile werden anhand des in der Fig. 1 dargestellten Ausführungsbeispieles weiter erklärt. Dabei zeigt Fig. 1 eine schematische Schnittzeichnung einer erfindungsgemäßen Vorrichtung zur Durchführung des erfindungsgemäßen Verfahrens.

Gemäß Fig. 1 umfasst die Vorrichtung (1) eine Einlassvorrichtung (3) zur Zugabe von thermoplastischem Polymer (4) und ein Mittel (2) zur Herstellung einer Polymerschmelze (6), wobei die Vorrichtung (1) hier eine Schneckenknet- und Extrudiervorrichtung ist. Weiter umfasst die Vorrichtung (1) eine Fördervorrichtung (5) zur Beförderung der Polymerschmelze (6) in Richtung der Auslasseinheit (8), eine Zuführungseinrichtung (16) zur Zugabe von Koagulierungsmittel (18), ein Mittel (12) zum Erzeugen von Schallwellen (14), sowie ein Filtermittel (10). Die Einlassvorrichtung (3), die Zuführungseinrichtung (16), die Zone der Schallwellen (14), das Filtermittel (10), sowie die Auslasseinheit (8) sind im bzw. am Mittel (2) aufeinander folgend in stromabwärtiger Richtung bezüglich der Flussrichtung der Polymerschmelze (6) angeordnet.

Mit der Vorrichtung gemäß Fig. 1 kann das erfindungsgemäße Verfahren wie folgt durchgeführt werden:
In die Vorrichtung (1) wird über eine Einlassvorrichtung (3) ein thermoplastisches Polymer (4), hier PET-Flakes mit verschiedenen Farbpigmenten aus Flaschenmaterial (Konzentration: 0,1 Gew.%), eingebracht. Die Farbpigmente haben mittlere Partikeldurchmesser von ca. 25 nm bis 0,1 µm. Über die Fördervorrichtung (5) wird im Mittel (2) über mechanische Scherkräfte, sowie über thermische Energie, die über eine Heizeinheit (nicht gezeigt) zugeführt wird, das feste Polymer (4) auf ca. 290 °C erhitzt, in die Polymerschmelze (6) überführt und in Richtung der Auslasseinheit (8) befördert. Anschließend wird über die Zuführungseinrichtung (16) ein Koagulierungsmittel (18) in die vorbeifließende Polymerschmelze (6) eingebracht, was eine Koagulierung der dispergierten Füllstoffe in der Polymerschmelze (6) initiiert. Geeignete Koagulierungsmittel zur Koagulation von Farbpigmenten sind im Stand der Technik bekannt und werden hier nicht weiter erläutert. Danach wird die Polymerschmelze (6) zusammen mit dem eingebrachten Koagulierungsmittel (18) mit Ultraschallwellen (14) der Frequenz 45 kHz beaufschlagt, die über das Mittel (12) in das Mittel (2) eingebracht werden. Dadurch wird die Ausbildung von Koagulaten der Füllstoffe weiter verstärkt bzw. beschleunigt, so dass in der Polymerschmelze (20) koagulierte Füllstoffpartikel ausgebildet werden, die einen mittleren Partikeldurchmesser von ca. 500 µm besitzen. Diese werden anschließend über das Filtermittel (10), hier ein herkömmlicher Partikelfilter mit einer Porengröße von 250 µm, aus der Polymerschmelze (20) gefiltert.

Aus der Auslassvorrichtung (8) tritt eine gereinigte Polymerschmelze (9) aus, die annähernd keine Farbpigmente (Konzentration: kleiner 1 ppm) mehr erhält. Nach Granulieren kann das gereinigte Polymermaterial, gegebenenfalls nach weiteren Aufarbeitungsschritten wie zum Beispiel eine Erhöhung der intrinsischen Viskosität, wieder zur transparenten und farblosen PET Flaschen verarbeitet werden.

Die oben angegebenen mittleren Partikeldurchmesser der Füllstoffe beziehen sich auf den Mittelwert des Partikeldurchmessers des Füllstoffs bzw. Füllstoffkoagulats in der festen Polymermatrix. Der Mittelwert des Partikeldurchmessers wird dabei über eine optische Analyse mittels eines Transmissionselektronenmikroskops (TEM) bestimmt. Die Konzentration von Füllstoffen im den PET-Flakes und im gereinigten Polymermaterial wird über Thermoanalyse ermittelt.

## Patentansprüche

1. Verfahren zur Reinigung eines thermoplastischen Polymers (4), umfassend mindestens einen dispergierten Füllstoff, wobei das Verfahren den Schritt (a) des Herstellens einer Polymerschmelze (6) des thermoplastischen Polymers (4), und den Schritt (b) des Filtrierens der Polymerschmelze (6) umfasst, **dadurch gekennzeichnet, dass** der dispergierte Füllstoff vor Schritt (b) zumindest teilweise in eine koagulierte und filtrierbare Form überführt wird.

2. Verfahren nach Anspruch 1, **dadurch gekennzeichnet, dass** das Überführen des dispergierten Füllstoffs in eine koagulierte und filtrierbare Form durch Zugabe eines Koagulierungsmittels (18) zum thermoplastischen Polymer (4) und/oder zur Polymerschmelze (6) erfolgt.

3. Verfahren nach Anspruch 2, **dadurch gekennzeichnet, dass** die Koagulierung des dispergierten Füllstoffs aufgrund einer chemischen Reaktion des Füllstoffs mit dem Koagulierungsmittel (18) und/oder aufgrund einer chemischen Reaktion des Füllstoffs selbst, die durch das Koagulierungsmittel (18) induziert wird, erfolgt, und/oder aufgrund der Änderung von mindestens einem physikalischen Parameter, insbesondere dem pH-Wert, die durch das Koagulierungsmittel (18) induziert wird, erfolgt.

4. Verfahren nach Anspruch 1 bis 3, **dadurch gekennzeichnet, dass** das Überführen des dispergierten Füllstoffs in eine koagulierte und filtrierbare Form durch Behandeln der Polymerschmelze (6) mit Schallwellen, bevorzugt Ultraschallwellen zwischen 16 kHz und 1,6 GHz, besonders bevorzugt zwischen 20 kHz und 100 kHz, erfolgt.

5. Verfahren nach Anspruch 1 bis 4, **dadurch gekennzeichnet, dass** das thermoplastische Polymer ausgewählt ist aus der Gruppe, umfassend Polyester, Polystyrol, Polyolefin, Polyamid oder Polycarbonat, bevorzugt Polyethylenterephthalat, Polypropylen oder Polyethylen, oder Copolymere dieser Polymere.

6. Verfahren nach Anspruch 1 bis 5, **dadurch gekennzeichnet, dass** der Füllstoff ein organischer und/oder anorganischer Füllstoff ist, der ausgewählt ist aus der Gruppe, umfassend Färbemittel wie Pigmente, insbesondere Titandioxid, Lichtschutzmittel, Verstärkungsmittel, insbesondere Fasern wie Glasfasern oder Polymerfasern, Flammschutzmittel, Katalysatoren zur Herstellung des thermoplastischen Polymers, Sauerstoffscavenger oder Antiblockmittel.

7. Verfahren nach Anspruch 1 bis 6, **dadurch gekennzeichnet, dass** der dispergierte Füllstoff in molekular dispergierter Form oder in der Form von Partikeln vorliegt, wobei der mittlere Partikeldurchmesser weniger als 1µm, bevorzugt weniger als 0,1 µm, besonders bevorzugt weniger als 0,05 µm beträgt.

8. Verfahren nach Anspruch 1 bis 7, **dadurch gekennzeichnet, dass** der koagulierte und filtrierbare Füllstoff in der Form von Partikeln vorliegt, wobei der mittlere Partikeldurchmesser mehr als 5 µm, bevorzugt mehr als 10 µm, besonders bevorzugt mehr als 100 µm beträgt.

9. Verfahren nach Anspruch 1 bis 8, **dadurch gekennzeichnet, dass** sich die mittlere Partikelgröße des Füllstoffs durch die Koagulation mindestens um den Faktor 5, bevorzugt Faktor 10, besonders bevorzugt Faktor 100, erhöht.

10. Vorrichtung (1) zur Reinigung eines thermoplastischen Polymers (4), umfassend mindestens einen dispergierten Füllstoff, wobei die Vorrichtung (1) ein Mittel (2) zur Herstellung einer Polymerschmelze (6) aus dem thermoplastischen Polymer (4) und ein Filtermittel (10) umfasst, **dadurch gekennzeichnet, dass** die Vorrichtung (1) weiter ein Mittel (12) zum Erzeugen von Schallwellen (14), bevorzugt Ultraschallwellen, umfasst.

11. Vorrichtung (1) nach Anspruch 10, **dadurch gekennzeichnet, dass** das Mittel (2) eine Schneckenknet- und Extrudiervorrichtung zum kontinuierlichen Erzeugen und Befördern einer Polymerschmelze (6) ist, wobei das Mittel (12) zum Erzeugen von Schallwellen (14) so angeordnet ist, das die Polymerschmelze (6) innerhalb der Schneckenknet- und Extrudiervorrichtung mit Schallwellen (14) beaufschlagt wird, und bezüglich des Filtermittels (10) so angeordnet ist, dass es sich stromaufwärts im Hinblick auf die Beförderungsrichtung der Polymerschmelze (6) befindet.

12. Vorrichtung (1) nach Anspruch 10 oder 11, **dadurch gekennzeichnet, dass** Mittel (12) zum Erzeugen von Schallwellen (14) ein Ultraschallwellengerät mit einer Frequenz zwischen 16 kHz und 1,6 GHz, besonders bevorzugt zwischen 20 kHz und 100 kHz, ist.

13. Vorrichtung (1) nach Anspruch 10 bis 12, **dadurch gekennzeichnet, dass** die Vorrichtung (1) eine Zuführungseinrichtung (16) für ein Koagulierungsmittel (18) umfasst, die bezüglich des Filtermittels (10), und bevorzugt außerdem bezüglich des Mittels (12) zum Erzeugen von Schallwellen (14), so angeordnet ist, dass sie sich stromaufwärts im Hinblick auf die Beförderungsrichtung der Polymerschmelze befindet.

14. Vorrichtung (1) nach Anspruch 10 bis 13, **dadurch gekennzeichnet, dass** das Filtermittel (10) ein oder mehrere Mikrosiebe umfasst, deren Maschenweiten im Bereich von 10 µm bis 100 µm, bevorzugt im Bereich von 20 µm bis 50 µm, liegen, und/oder einen oder mehrere Partikelfilter umfasst, deren Maschenweiten im Bereich von 100 µm bis 1.000 µm, bevorzugt im Bereich von 200 µm bis 500 µm, liegen.

15. Verwendung eines Koagulierungsmittels (18) und/oder eines Mittels (12) zum Erzeugen von Schallwellen (14) zur Reinigung eines thermoplastischen Polymers (4), umfassend mindestens einen dispergierten Füllstoff, **dadurch gekennzeichnet, dass** durch die Verwendung des Koagulierungsmittels (18) und/oder des Mittels (12) zum Erzeugen von Schallwellen (14) der dispergierte Füllstoff zumindest teilweise in eine koagulierte Form überführt und anschließend abfiltriert wird.
